# EUROPEAN PATENT APPLICATION

(11) **EP 2 290 500 A1**
(43) Date of publication of application: **02.03.2011**
(21) Application number: 09305798.2
(22) Date of filing: 28.08.2009
(51) Int. Cl.: G06F 1/32

(54) **Method of and apparatus for managing power consumption in an electronic device**

(71) Applicant: ST-Ericsson SA, 1228 Plan-les-Ouates (CH); ST-Ericsson (France) SAS, 38000 Grenoble (FR); St Ericsson Inc., Carrolton, TX 75006 (US)
(72) Inventor: Cimaz, Lionel, 35137, PLEUMELEUC (FR); Matthews, Phil, AUSTIN, TX 78739 (US); Roy, Subrata, Austin, TX 78738 (US)
(74) Representative: Cabinet Plasseraud

(57) **Abstract**

A method of managing power consumption in an electronic circuit, the circuit including a processing unit (101) and a clock circuit (102), the method comprising gating a clock signal (CLK) when the processing unit (101) is in an idle state so that the processing unit (101) does not receive clock signals; detecting an event signal at an input to the processing unit (101); latching the event signal while the event signal has not yet been processed by the processing unit (101); ungating the clock signal (CLK) to provide a clock signal to the processing unit; and processing the event signal at the processing unit (101).

## Description

### Field of the Invention

The present invention relates in general to a method and an apparatus for managing power consumption in an electronic device. Particularly but not exclusively the invention relates to a method and an apparatus for managing power consumption in a gated digital circuit.

### Background of the Invention

With the development of faster and more powerful processors in many electronic devices power consumption has become an issue of increasing importance, in particular with regard to mobile electronic devices with limited power sources. Mobile devices such as, but not limited to, mobile telephones, personal data appliances, personal digital assistants (PDAs), lap top computers and the like, are sometimes required to operate for long periods of time before their power source can be recharged. Such devices include integrated circuits including digital processors or logic circuits which should always to be powered to perform their function even when they are in an idle state. Origins of current consumption in gated digital circuits include gate leakages and gate switching activity.

Clock gating is a known power management technique which can be used to reduce the power consumption associated with a clock in an integrated circuit by placing various logic components such as flip flops within the integrated circuit in an idle state whenever they are not performing a particular processing function. This is achieved by gating a system clock to disable the clock signals fed to a particular processing component when the processing component is not in use and ungating the system clock, i.e. feeding clock signals to the processing component, when the processing component is ready to perform processing. Power consumption resulting from the clocking of logic components not required for a particular processing function can thereby reduced.

Although such an approach helps to reduce power consumption clock gating involves current consumption related to clock switching. Moreover, the clock itself needs to be routed to each clock gating cell implemented in the overall digital circuit design. These clock gating cells have a capacitive load themselves on their input as well as clock route capacitance. Even if this load is significantly lower than the equivalent load of a flip flop, it is not negligible and contributes to the current consumption. A known solution in an attempt to address the problem of current consumption is to implement a master clock gating to prevent clock signals being received at one or more processors. However the clock controller needs to be active in order to gate/ungate the clock signals received at the processor and thus consumes power itself in order to perform clock control.

For a standalone function which is reactive to asynchronous input signals, the synchronizers placed on the route of inputs still need to be clocked in order to propagate the signal to the function. Synchronizers are generally built using 2 flip flops. If the function manages a significant number of inputs, the absence of clock gating on these flip flops can be a significant contributor to current consumption. Implementing an asynchronous design as an alternative solution is complex and does not respect timing requirements.

### Summary of the Invention

In view of one or more of the foregoing concerns, a first aspect of the invention provides a method of managing power consumption in an electronic circuit, the circuit including a processing unit and a clock circuit, the method comprising gating a clock signal when the processing unit is in an idle state such that the processing unit does not receive clock signals; checking for an event signal at an input to the processing unit, and upon detection of an event signal at an input to the processing unit, the method further comprising latching the event signal while the event signal has not yet been processed by the processing unit; ungating the clock signal to provide a clock signal to the processing unit; and processing the event signal at the processing unit.

A second aspect of the invention provides a logic circuitry for managing power consumption, the logic circuitry comprising: a processing unit for processing an input event signal; a clock controller for gating and ungating a clock signal to the processing unit to disable or enable the processing unit; an event sensor for detecting an input event signal at an input to the processing unit; andan event capture unit coupled to the event sensor for latching the input event signal while the event signal has not yet been processed by the processing unit.

The method according to embodiments of the invention may be computer implemented. The methods may be implemented in software on a programmable apparatus. They may also be implemented solely in hardware or in software, or in a combination thereof.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### Brief Description of the Drawings

Embodiments of the invention will now be described, by way of example only, and with reference to the following drawings in which:-
Figure 1 is a block diagram of an apparatus for managing power consumption of a digital circuit according to an embodiment of the invention;
Figure 2 is a flow chart of a method of managing power consumption of a digital circuit according to the embodiment of the invention; and
Figure 3 is a block diagram of an event capture unit according to an embodiment of the invention.

### Detailed description

In the description which follows, for purposes of explanation and not limitation, specific details are set forth such as particular structures, architectures, interfaces, techniques, etc. in order to provide an understanding of the various aspects of the invention. However, it will be apparent to those skilled in the art having the benefit of the present disclosure that the various aspects of the invention may be practiced in other examples that depart from these specific details. In certain instances, descriptions of well-known devices, circuits, and methods are omitted so as not to obscure the description of the present invention with unnecessary detail.

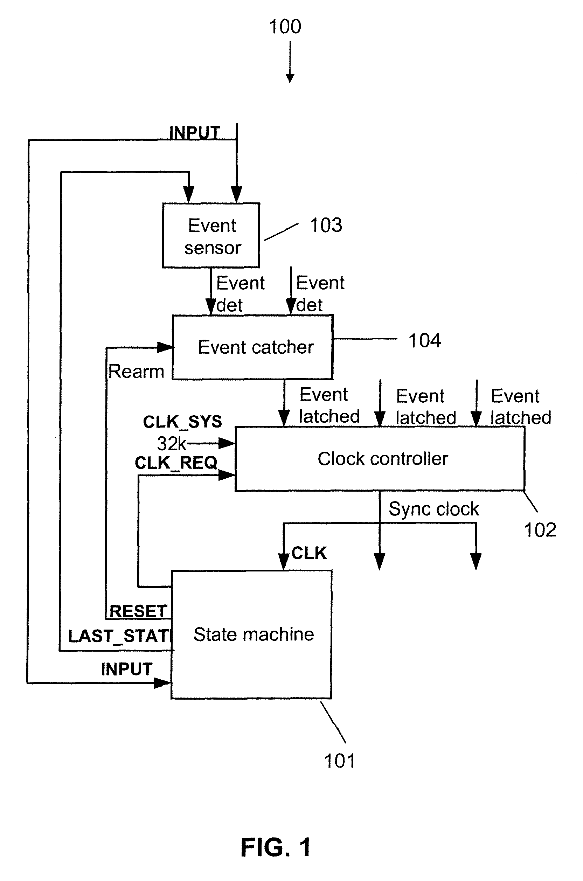

A method of an apparatus for managing power consumption in an electronic device, according to an embodiment of the invention will be described with reference to Figures 1 to 3.

Figure 1 is a block diagram of a first embodiment of logic circuitry for managing power consumption. Such circuitry may form part of a GSM, GPRS or EDGE chipset of a wireless communication device, for example, but it will be appreciated that the circuitry is not limited thereto and may be applied in any digital device or processing system where it is desirable to reduce power consumption. The circuit 100 includes a state machine 101, the clock input of which is to be controlled. The state machine 101 is configured to receive an input data signal INPUT and processes the input signal INPUT to determine an output state. One state of operation of state machine 101 is an idle state. The state machine 101 enters the idle state whenever no input data signal has been received or whenever an input signal has been received but does require the state machine 101 to take action.

The state machine 101 includes a gated clock circuit responsive to clock signals CLK for enabling or disabling the state machine 101. The clock signals are received from a clock gating circuit 102 to which the state machine 101 is coupled. The clock gating circuit 102 receives clock signals CLK_SYS from the system clock within the main device in which the logic circuitry 100 is embedded.

The logic circuitry 100 further includes an event sensor 103 for sensing an event signal INPUT at the input to the state machine 101. The event sensor 103 is coupled to an event capture unit 104 for latching the input event signal INPUT. The state machine 101 is further coupled to the event sensor 103 to provide a signal LAST_STATE indicating the last state of the state machine 101; to the event capture unit 104 for providing a reset signal RESET to rearm the event catcher 104; and to the clock gating circuit 102 to provide a clock request signal CLK_REQ to the clock gating circuit 102 to request reception of clock signals. The event capture unit 104 is coupled to the clock gating circuit 102 to provide a latched event signal EVENT_LATCH to the clock gating circuit 102.

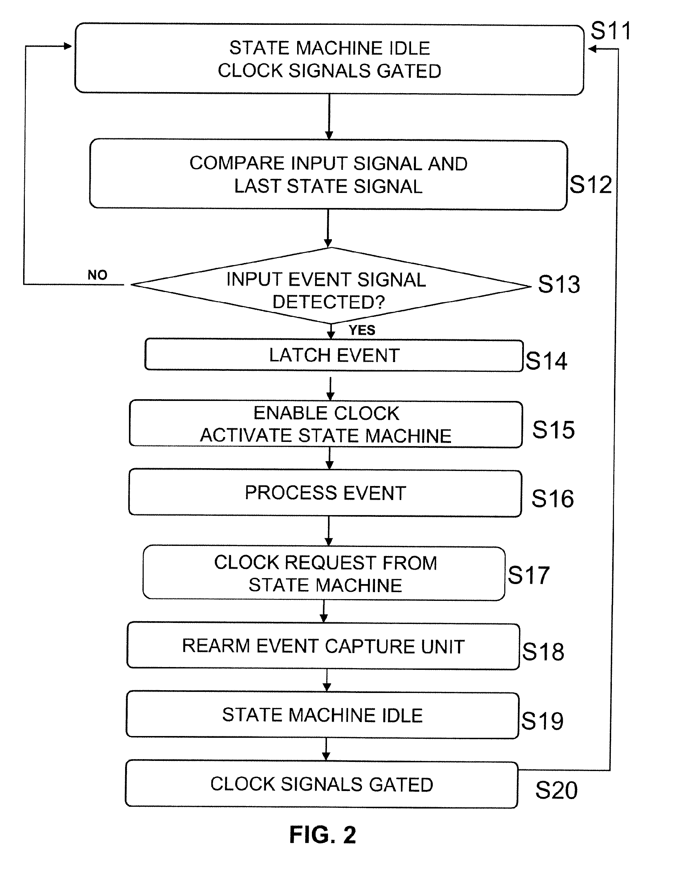

Figure 2 is a flow chart of the first embodiment of the invention when the state machine is initially operating in an idle state. In step S11 of the method of the first embodiment of the invention the state machine is in an idle state since no input data signal has been received. The clock gating circuit 102 gates the system clock so that no clock signals CLK are received by the state machine 101. Event sensor receives a LAST_STATE signal from the state machine 101 for comparing with an input signal INPUT for detection of an input event. In step S12 the state of the input signal INPUT is compared with last state of the state machine LAST_STATE. When a difference in the two signals is detected it is determined that the input to the state machine 101 has changed and an event is thus detected in step S13. In step S14 the sensed input event is forwarded to the Event capture unit S14 where it is latched. Latching of the input event is maintained until the input event has been processed by the state machine 101. The presence of the latched event is used to enable the clock gating circuit 102 in step S15 to provide the state machine 101 with a clock signal CLK (i.e. to ungate the system clock and wake up the idle state machine 101). Thus the state machine 101 is activated so that it can react to the input event signal INPUT. In step S16 the input event is processed by the state machine 101.

After the event has been processed by the state machine 101, the event capture unit 104 should be reset or rearmed in order to enable it to capture a new input signal change. Since the process of rearming the capture event unit 104 would clear the current latched event and because it is the event itself which enables the clock gating circuit 102 to in turn enable the state machine 101, clearing the current latched event could lead to the clock signals fed to the state machine 101 being stopped before the completion of the event capture unit rearming operation. In order to maintain enabling of the clock gating circuit 102 such that clock signals continue to be delivered to the state machine 101, the state machine 101 is configured so that it has the capability to enable the clock gating circuit to deliver clock signals. Thus in step S17 the state machine 101 requests the clock to be enabled by sending a clock request signal CLK_REQ to the clock gating circuit 102.

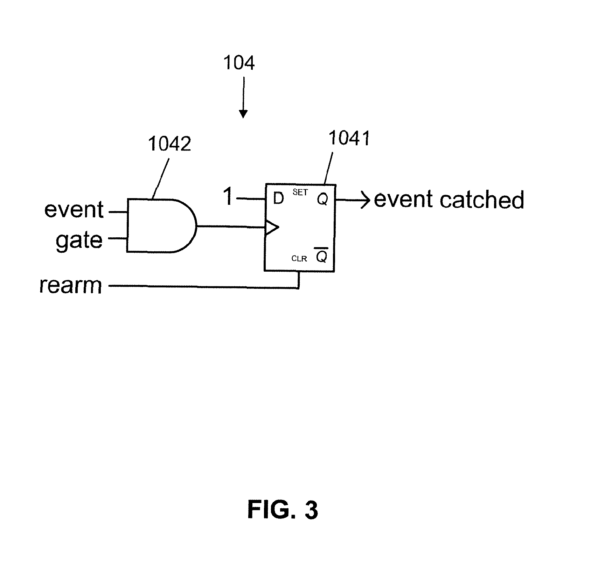

The event capture unit 104 illustrated in more detail in Figure 3 is based on a D flip flop 1041 and an AND gate 1042. The clock input fed to the D flip flop 1041 via the AND gate 1042 is the event sensor signal EVENT_DET from the event sensor 103. The rearm input RESET from the state machine 101 for rearming the capture event unit 104 is inputted to the D flip flop reset (the D input is forced to 1). This configuration minimises problems which could result from an asynchronous reset of a D flip flop when both the clock is rising (event occurs) and the reset is falling (rearm finishes) and thereby prevents the flip flop from becoming metastable when both orders would produce opposing D flip flop states.

The rearming of the event capture unit 104 may be carried out according to the steps below: When the "gate" signal is set low and "rearm" high, the D flip flop resets. When the "gate" signal is kept low and the "rearm" is low, D flip flop has been reset but its clock input cannot rise. When the "gate" signal passes to high the D flip flop is ready again to capture an event. By virtue of the « gate » signal, the D flip flop cannot receive synchronous edges on the clock and the reset input which would drive a metastable state. In addition to the rearm command from the state machine 101, the event capture unit « gate » signal also should come from the associated state machine 101.

Since the clock gating circuit 102 may receive a clock request from the event capture unit 104 and from the state machine 101, the clock gating system can embed a clock controller which is capable of combining all clock requests and maintaining some « dead » clock cycles before gating the clock. The dead clock cycles may be useful for allowing the full propagation of the state of the state machine down to all the attached synchronous flip flops.

After completion of event processing the state machine rearms the event capture unit 104 by sending a rearm signal RESET to the event capture unit 104 in step S18. When the event capture unit 104 has been rearmed the state machine transitions back to the idle state in step S19 waiting for a new input event and stops requesting the clock signal. Since there is no pending event and no clock request from the state machine 101, the clock gating circuit 102 gates the clock in step S20 so that no clock signals are delivered to the state machine 101. The function provided by the logic circuitry then awaits a new event.

Functions such as state machines include generally some period of time where there are purely static waiting for an input to change before processing is resumed again with state machines. When these static periods are very long compared to active ones, it is advantageous in terms of power consumption to totally stop the clock so as not waste energy in the switching of synchronizer and the clock tree. Using the event management implemented by the methods according to the embodiments of the invention, the function can implement a top single clock gating solution while still being reactive to input change when the clock is effectively gated. When the clock is gated, the clock signal will hit only few gates representing the clock gating solution, so the switching current consumption of flip-flop clock gate input capacitance, synchronizers or clock tree capacitance are minimised.

By virtue of event capturing, fugitive input change is still acquired even if the clock signal was not being delivered to the date machine when the input change occurred. Furthermore, fugitive input change having a period smaller than the period of the basic clock can be acquired by the state machine indirectly which is basically not possible in pure synchronous design.

Accordingly, embodiments of the invention can provide a clock gating solution which can implement a clock gating function in an electronic device while still being receptive to input changes at state machine or processor of the electronic device. Consequently power consumption is reduced, thereby extending battery life while providing reliable performance. Moreover, there is no requirement for a top clock controller for global clock gating.

The circuitry described above may be disposed in an integrated circuit (IC) such as a system on a chip, and the IC may be incorporated into a system.

The method according to the embodiments of the invention can find applications in the management of power consumption in electronic devices such as wireless mobile devices such as those comprising integrated circuits implementing EDGE, GSM or GPRS technology. In the design of modules for such devices the state machines and clocked function may be located in a synchronous portion along with a clock controller. This portion of design can follow a standard synthesis operations including automatic insertion of local clock gating and scan chains. All event sensors and catchers can then be located in an asynchronous portion. This portion of design follows a standard synthesis operation but is not typically subject to local clock gating or scanning.

Although the present invention has been described hereinabove with reference to specific embodiments, the present invention is not limited to the specific embodiments, and modifications will be apparent to a skilled person in the art which lie within the scope of the present invention.

For instance, while the foregoing examples have been explained with respect to a state machine, it will be appreciated that the invention may be applied to the control of power in circuits including other gated processing devices.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of managing power consumption in an electronic circuit, the circuit including a processing unit and a clock circuit, the method comprising
gating a clock signal when the processing unit is in an idle state such that the processing unit does not receive clock signals;
checking for an event signal at an input to the processing unit, and upon detection of an event signal at an input to the processing unit, the method further comprising
latching the event signal while the event signal has not yet been processed by the processing unit;
ungating the clock signal to provide a clock signal to the processing unit; and
processing the event signal at the processing unit.

2. A method according to claim 1, wherein event capture means latching the event signal enables a clock controller to provide the clock signal to the processing unit when the event signal is latched.

3. A method according to claim 1 or 2, further comprising the processing unit requesting the clock signals to be provided to the processing unit.

4. A method according to any one of the preceding claims, wherein after completion of processing the event signal, the processing unit resets the event capture means to enable the event capture means to capture a subsequent event signal while still requesting the clock signals to be provided to the processing unit.

5. A method according to claim 4, further comprising the processor transitioning to the idle state after the event capture means has been reset and no longer requesting the clock.

6. A method according to any one of the preceding claims wherein the clock signal to the processing unit is gated in response to the absence of an event signal at the input to the processing unit and to the absence of a clock request from the processing unit.

7. A logic circuitry for managing power consumption, the logic circuitry comprising:
a processing unit for processing an input event signal;
a clock controller for gating and ungating a clock signal to the processing unit to disable or enable the processing unit;
an event sensor for detecting an input event signal at an input to the processing unit; and
an event capture unit coupled to the event sensor for latching the input event signal while the event signal has not yet been processed by the processing unit.

8. A circuitry according to claim 7, wherein the event capture unit is operable to enable the clock controller to provide the clock signal to the processing unit when an input event signal is latched.

9. A circuitry according to claim 7 or 8, wherein the processing unit is operable to request the clock controller to provide clock signals to the processing unit.

10. A circuitry according to any one of claims 7 to 9, wherein the processing unit is operable to reset the event capture unit after completion of processing the event signal to enable the event capture unit to capture a subsequent event signal while still requesting the clock signals to be provided to the processing unit.

11. A circuitry according to any one of claims 8 to 10, wherein the processing unit is operable to transition to the idle state and to stop requesting the clock after the event capture means has been reset.

12. A circuitry according to any one of claims 7 to 11, wherein clock controller is operable to gate the clock signal to the processing unit in response to the absence of an event signal at the input to the processing unit and to the absence of a clock request from the processing unit.

13. A wireless communication device including a logic circuitry for managing power consumption of the device according to any of claims 7 to11.

14. A computer-readable medium having computer-executable instructions to enable a computer system to perform the method of any one of claims 1 to 6.
